Europäisches Patentamt

European Patent Office

Office européen des brevets

(19)

(11) Publication number: **0 419 797 A2**

## EUROPEAN PATENT APPLICATION

(21) Application number: **90114279.4**

(51) Int. Cl.⁵: **G06F 12/14**

(22) Date of filing: **25.07.90**

(30) Priority: **29.09.89 JP 252192/89**

(43) Date of publication of application:
**03.04.91 Bulletin 91/14**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Uchikoga, Hiroshi, c/o Intellectual**
**Property Div.**
**K. K. Toshiba, 1-1 Shibaura 1-chome,**
**Minato-ku**
**Tokyo 105(JP)**

(74) Representative: **Henkel, Feiler, Hänzel &**
**Partner**
**Möhlstrasse 37**
**W-8000 München 80(DE)**

(54) **Memory access control method and system for realizing the same.**

(57) Comparators (102, 103, 104) are provided for monitoring a data write request output from CPU (101) to a keyboard controller (KBC) 113, and a request for inhibiting a memory access of 1MB or more. Circuits (106, 107, 108, 110, 111, 112, 114) are provided for generating a memory access dis- abling signal for disabling a memory access of 1MB or more in response to the detection of the requests by the comparators. The memory access disabling signal is transmitted to the memory and KBC 113.

F I G. 3

## MEMORY ACCESS CONTROL METHOD AND SYSTEM FOR REALIZING THE SAME

The present invention relates to a suitable memory access control system and method for realizing the same used in a personal computer.

In accordance with the progress of a semiconductor technology, microprocessors and memory LSIs have been supplied at extremely low cost. Also, the performance thereof has been remarkably improved. Particularly in the field of the microprocessor, the bit width has been extended in order that an 8-bit processing, a 16-bit processing, and a 32-bit processing can be simultaneously performed, resulting in a high-speed processing. As such a typical microprocessor, iAPX86 (8086), iAPX88 (8088), iAPX186 (80186), iAPX286 (80286), iAPX386 (80386), manufactured by Intel Corp. U.S.A., have been normally used in the field of the personal computer.

For example, iAPX 286 can be operated in two different modes, that is, a real address mode and a protected virtual address mode. In the real address mode, iAPX286 operates as iAPX86 (8086) with high performance. In this case, memory up to 1 mega bytes (MB) can be accessed. Programs, which are written for iAPX86 or iAPX186, can be executed without making any modifications. Moreover, in the protected mode, a memory access having 1MB or more can be gained, and all functions of iAPX286 can be performed. These functions include a data protection, a system integration, a task simultaneous processing, a memory management including a virtual memory. In an initial state after a system reset, a processor starts operating in the real address mode. In the real address mode, all memory addressing is executed as a physical real address. When iAPX286 operates in the real address mode, a memory space of 1MB ($2^{20}$ bytes) can be addressed similar to the other processors in the iAPX86 family. The physical address is constituted by 20 bits, and each byte in the address space is identified by an inherent address. In other words, the physical addresses are set in the range of 0H-FFFFH. One address is designated by a pointer of 32 bits, and the pointer comprises the following two elements:

(1) 16-bit effective address offset which shows a specific position in a segment as a segment inner displacement in units of bytes; and
(2) 16-bit segment selector which shows a start address of the segment.

Since the size of one segment is 64K bytes in maximum, 16-bit (unsigned) effective address offset is sufficient to address an arbitrary one byte in the segment. The offset of the first address in the segment is 0 and the offset of the last address is FFFFH. The 16-bit segment selector designates which part in the physical space of $2^{20}$ bytes the start address of the segment is. In the real address mode, iAPX286 always generates the physical address of 20 bits by the values of the segment selector and the offset.

For example, in a case where an application program, which is prepared by iAPX86 microprocessor, is executed by iAPX286 microprocessor having a memory address space of 1MB or more, it is necessary to inhibit the memory access of 1MB or more. In iAPX286 microprocessor, a protection enable bit is provided, iAPX286 is constituted to be operated in the real address mode when the protection enable bit is in a reset state. However, since addresses A0-A24 are electrically provided (an address bus of A0-A24 is provided), there is a possibility that address A20 will become "1" by influence of noise. Accordingly, even in the real address mode, there is a possibility that the memory access to 1MB or more will be accessed.

A mechanism will now be described for preventing i8036 CPU from accessing a memory of 1MB or more in the real address mode by using a control signal of a keyboard controller (KBC).

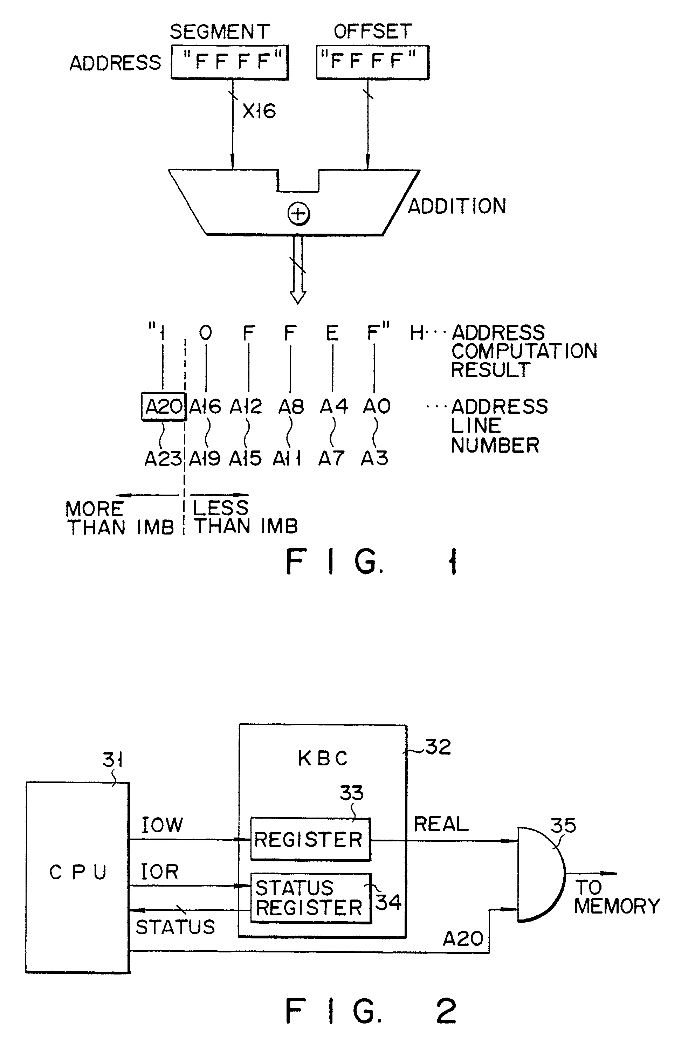

As shown in Fig. 1, for example, if the segment of the memory address is "FFFF" H, and the offset is "FFFF" H (wherein H shows an indication of Hexadecimal), the address computation result exceeds 1MB. Specifically, since "FFFF" is multiplied by 16 in the segment address and 4-bit-shifted to the left, "FFFF0" and "FFFF" are added. The bit (bit 20 of the memory address) of A20, which indicates 1MB, becomes 1. In this case, if the microprocessor i8086 is used as CPU, the address bus is constituted by lines A0 to A19 and the address computation result (computation result of the offset address and the segment address) is recognized as "0FFFF" H, and the address returns to the start of the memory and is accessed therefrom.

However, in a CPU using a microprocessor appeared after i8086, if the address computation result exceeds 1MB, the microprocessor recognizes this bit because of the presence of A20, memory access of 1MB or more is performed even if CPU is in the real address mode. As a result, the program does not normally operate. To eliminate this advantage, keyboard controller KBC outputs a control signal in response to a command and data from the CPU. The control signal gates A20 signal even if the CPU outputs address exceeding 1MB or more and the A20 signal is effective as a result of the address computation.

Fig. 2 is a schematic block diagram of the above-mentioned and conventional memory access control system. In Fig. 2, a system comprises a CPU 31, a KBC 32, a register (input and output port) 33 in KBC 32, a status register 34 indicating the status of KBC, and AND gate 35 controlling A20 signal. Even if A20 signal is output at "HIGH" level, A20 signal does not pass through the gate 35 and memory of 1MB or more is not accessed if CPU 31 accesses KBC 32 in advance so that a real signal, which is output from KBC 32, is set at "LOW" level. In other words, changing the REAL signal from "LOW" to "HIGH" means that the mode is changed from the real address mode to the protected virtual address mode. Moreover, changing the real signal from "HIGH" to "LOW" means that the mode is changed from the protected virtual address mode to the real address mode. In this case, to set the REAL signal to "LOW" level, CPU 31 first sends command "D1" H to the register 33 (input and output port designated by "64" H) in KBC 32 to inform KBC 32 of data write (IOW). At this time, a bit indicating an input buffer full of the status register in KBC 32 becomes "1". After the processing of command "D1" is finished by a firmware provided in KBC 32, this bit becomes "0". After reading this bit of "0", CPU 31 writes data to KBC 32 again. If CPU 31 sends data "DD" H to the input and output (I/O) port "60" H of KBC 32, a REAL signal becomes "LOW". Moreover, if CPU 31 sends data "DF" H thereto, the REAL signal becomes "HIGH."

When CPU 31 changes the REAL signal for controlling the memory access output from KBC 32 from HIGH to LOW or from LOW to HIGH, CPU 31 must wait for the data transmission to KBC 32 during a period from which the CPU 31 sends the command for write request to KBC 32 to which the CPU sends the data for changing the control signal, i.e., until the processing for the write request command is completed by the KBC 32. In other words, CPU 31 must wait for the data transmission to KBC 32 for a period during which the "input buffer full" bit becomes "1" in response to the command from the CPU 31, and the firmware sets the "input buffer full" bit to "0" after completing the command processing, to thereby enable the CPU 31 to write data to KBC 32.

An object of the present invention is to provide a memory control method and a system for realizing the same wherein a change for disabling a memory access of a certain specific range can be performed at a high speed and compatibility with a conventional system can be maintained.

According to a first aspect of the present invention, there is provided a memory access control system in a computer system having a memory, a central processing unit (CPU), a keyboard controller to which an input and output (I/O) port is assigned, comprising: means for detecting predetermined command and data output from said CPU to the I/O port assigned to said keyboard controller; means for generating a specific control signal for disabling a memory access of a certain specific range by said CPU in response to the detections of said command and data; and means for outputting said generated specific control signal to said memory and said keyboard controller.

According to a second aspect of the present invention, there is provided a method for controlling a memory access in a computer system having a memory, a central processing unit (CPU), a keyboard controller to which an input and output (I/O) port is assigned, comprising the steps of: a) transmitting a data write request to said keyboard controller; b) transmitting to said keyboard controller a request for disabling a memory access of a certain specific range without waiting for the response from said keyboard controller; c) monitoring each request transmitted in steps a) and b) and generating a specific control signal for disabling a memory access of a certain specific range; and d) transmitting said specific control signal to said memory and said keyboard controller.

According to the present invention, there is provided functions of monitoring the command and data output from the CPU to the input/output (I/O) port of KBC, processing these command and data without transmitting them to KBC, outputting a REAL signal for controlling a memory address of 1MB or more, and reflecting the result on KBC. As a result, the change of the REAL signal can be realized by a hardware.

The present invention is not constituted such that CPU sends the command to KBC and then sends data to KBC after the command is processed by the firmware in KBC. More specifically, command and data are not transmitted to KBC. Instead, the command processing by a hardware enables or disenables access to the memory address of 1MB or more. This brings about a technical advantage in that the changing of the real address mode and the protected virtual address mode is performed at a high speed. Moreover, 100% software compatibility with the conventional system (REAL control using KBC) can be maintained.

This invention can be more fully understood from the following detailed description when taken in conjunction with the accompanying drawings, in which:

Fig. 1 is a view explaining an address computation result exceeding 1MB;

Fig. 2 is a block diagram showing a system performing a memory access control of 1MB or more according to the prior art; and

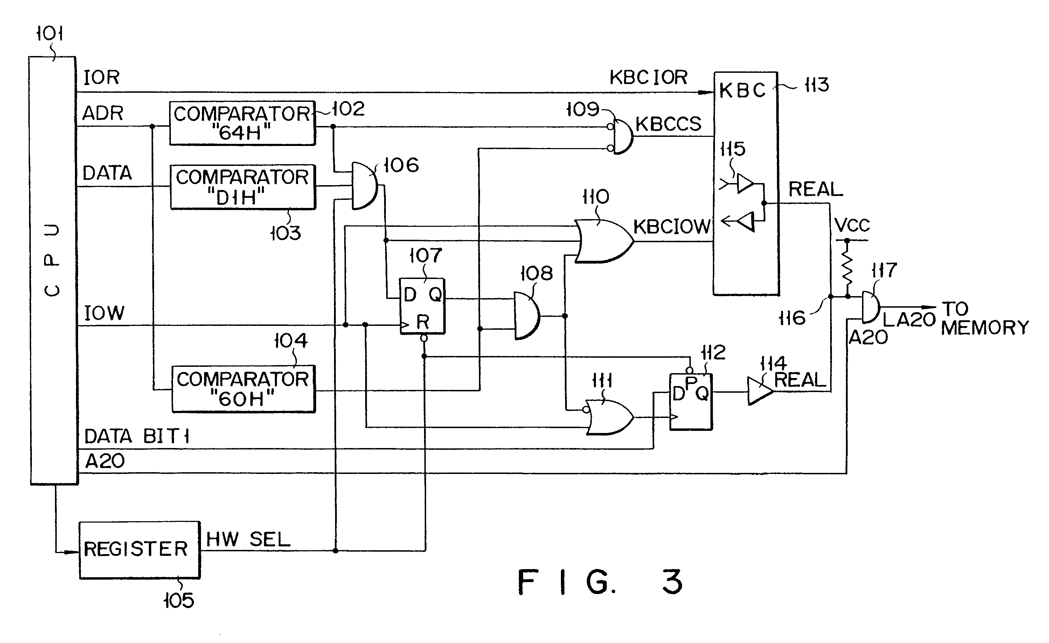

Fig. 3 is a block diagram showing one embodiment of a memory access control system according to the present invention.

A CPU 101 is connected to comparators 102, 103, 104, and a register 105. The comparator 102 detects an address for designating KBC I/O port "64" H. The comparator 103 detects a command data "D1" H. The comparator 104 detects an address for designating KBC I/O port "60" H. The register 105 holds data for designating that CPU 101 performs the output of REAL signal by a hardware control or a KBC control. The selection of the hardware control and the KBC control is performed by a setup processing. The reason the conventional KBC control can be also selected is that a program, in which CPU is operated at a low speed depending on the application program, is executed. In a case where the hardware control is selected, CPU 101 sets an HWSEL signal of "HIGH" level in the register 105. In a case where KBC control is selected, CPU 101 sets the HWSEL signal of "LOW" level in the register 105. The output signals of the comparators 102, 103 and the HWSEL signal from the register 105 are ANDed by an AND gate 106. By the selection of the hardware control, if the CPU 101 outputs an address for writing a command "D1" in the I/O port "64" H, HWSEL signal from the register 105 and the output signals from the comparators 102 and 103 become "HIGH" and a "HIGH" level signal is output from the gate 106. In contrast, if the KBC control is performed, the output of AND gate 106 becomes "LOW" since HWSEL signal is at "LOW." A D-input terminal of a flip-flop 107 is connected to an output terminal of AND gage 106 and a clock input terminal thereof is connected to CPU 101. The flip-flop 107 is set if the CPU 101 outputs the above command to enable the I/O write signal IOW ("LOW" active) to thereby controlling these signals by the hardware control. The output Q of the flip-flop 107 becomes "HIGH" level.

On the other hands, in order to perform the KBC control, the flip-flop 107 is reset by HWSEL signal of "LOW" level, and the output thereof becomes "LOW" level. An AND gate 108 is connected to the output Q of the flip-flop 107 and the output of the comparator 104, and these outputs are ANDed. AND gate 108 outputs a "HIGH" level signal in a case where CPU 101 outputs the above command and an address of "60" H port for writing the active I/O write signals IOW and data, and these signals controlled by the hardware control. In a case where the KBC control is performed, AND gate 108 outputs a "LOW" level signal. An AND gate 109 outputs a chip select signal KBCCS for selecting a KBC 113 when the CPU 101 outputs an address of KBC I/O port. An OR gate 110 is connected to the AND gate 106, the CPU 101, and the AND gate 108. In a case where KBC control is performed, the OR gate 110 outputs an effective KBC I/O write signal KBCIOW of "LOW" level when the CPU 101 writes data in KBC 113. In a case where the hardware control is performed, the OR gate 111 outputs KBC I/O write signal KBCIOW of "HIGH" level to disable the I/O write to the KBC 113. An OR gate 110 is connected to the output of the AND gate 108 and to the CPU 101, and the output of the OR gate becomes "LOW" level when the data is written in the I/O port "60" H by the hardware control.

A flip-flop 112 latches data which determines whether or not REAL signal is active in the case of the hardware control. The O output of the flip-flop 112 becomes "LOW" when REAL signal is set to be active (LOW), that is, when the access of 1MB or more is not performed, and becomes "HIGH" when the access to memory of 1MB or more is performed. An gate 114 of an open collector output outputs the REAL signal in accordance with the output of the flip-flop 112. An I/O gate 115 comprises an output gate of the open collector output for externally outputting the REAL signal generated by KBC 113, and an input gate for fetching into KBC 113 the REAL signal, which is output from the output gate 114 by the hardware control. The REAL signals, which are supplied from both KBC 113 (I/O gate 115) and the hardware (output gate 114), are wire-ORed by a pulled-up signal line 116. The REAL signal corresponding to the selected control of the KBC control and the hardware control is passed. The other REAL signal corresponding to the control not selected is set to an open (HIGH) state. When the hardware control is performed, the REAL output, which is from KBC 113, is set to the open (HIGH) state in advance. When the hardware control is performed, a command and data for setting the REAL signal output, which is from KBC 113, to the open state (HIGH) in advance. Since the HWSEL signal output from the register 105 becomes "LOW" in the KBC control, the flip-flop 112 is preset, and the output of the output gate 114 becomes "HIGH" to become the open state. The AND gate 117 ANDs A20 signal (bit 20 of the memory address) and the REAL signal on the signal line 116, thereby making it possible to control the memory access of 1MB or more by using the REAL signal.

The operation of the memory access control by the hardware control will now be described.

If the CPU 101 sets data for selecting the hardware control in the register 105, the HWSEL signal output from the register 105 becomes "HIGH." In this case, if the CPU 101 sends a signal for writing command "D1" into KBC I/O port "64" H, the output signal of the AND gate 106 becomes "HIGH." The flip-flop 107 latches this "HIGH" state in response to the active I/O write signal IOW of "LOW" level, which is supplied from CPU 101. As a result, the flip-flop 107 is set. In a case where the output of AND gate 106 is "HIGH", "HIGH" level signal KBCIOW indicating disabling of KBC I/O write, is output from the OR gate 110. When the CPU 101 reads the status register of KBC 113 by using the KBCIOR signal, the bit indicating the "input buffer full" remains "0". More specifically, it is indicated that the buffer is empty.

When the CPU 101 outputs the I/O address "60" H of KBC 113, the AND gate 108 opens. Thereby, the "HIGH" level signal, which is supplied from the flip-flop 107, is output from the AND gate 108, and the output of the OR gate 111 becomes "LOW." At this time, if bit 1 signal of data, which is written in KBC 113 by the CPU 101, is supplied to the D input of the flip-flop 112, the "bit 1" signal is latched by the flip-flop 112 in response to the "LOW" level signal supplied from the OR gate 111. Therefore, the state of the REAL signal output from the output gate 114, is determined by whether the first bit of data is "HIGH" or "LOW." More specifically, when the data "DD" for setting REAL signal into "LOW" is written in the port address "60" H, data bit 1 becomes "0." In a case where the data "DF" for setting REAL signal into "HIGH" is written, data bit 1 becomes "1" (Note that data bit starts from bit 0). In the hardware control, since REAL signal from the I/O gate 115 in KBC 113, is set to an open state ("HIGH"), which is high impedance in view of the circuit, the REAL signal from the hardware (output gate 114) appears on the signal line 116. The REAL signal on the signal line 116 is supplied to the AND gate together with the A20 signal, and the output from the AND gate 117 of the A20 signal is controlled in accordance with the state of REAL signal. The REAL signal on the signal line 116 is also supplied to KBC 113 (the REAL signal is stored in a predetermined register in KBC 113) by the I/O gate of KBC 113, and the state of the controlled memory access by the hardware control is reflected on KBC 113. The REAL signal is supplied to the KBC 113 in order to make the hardware and the KBC to have the same status. More specifically, if the REAL signal is set to "0", for example, by the hardware control and this change is not transmitted to KBC 113, the KBC 113 determines that the REAL signal is still "1". Therefore, if the KBC 113 performs further processing, an erroneous operation is caused. For this reason, the change of the REAL signal is reflected on the KBC 113.

The memory access control by the KBC control will now be described.

In the KBC control, the HWSEL signal of "LOW" level is output from the register 105, and the flip-flop 107 is reset. As a result, a "LOW" level signal is output from the Q output of the flip-flop 107, and KBC I/O write signal KBCIOW output from the OR gate 110, becomes active ("LOW" active). Thereby, all access from CPU 101 is performed via KBC 113. The flip-flop 112 is preset since the HWSEL signal is "LOW." Thereby, the Q output of the flip-flop 112 is set to "HIGH" level, and the output of the output gate 114 is set to "HIGH" level (open), i.e. high impedance from a view point of a circuit. As a result, the REAL signal supplied from the KBC 113 appears on the signal line 16. In the hardware control, the above-mentioned mechanism can also be realized by masking (disabling) a KBC chip select signal.

## Claims

1. A memory access control system in a computer system having a memory, a central processing unit (CPU), a keyboard controller to which an input and output (I/O) port is assigned, characterized by comprising:
means (102, 103, 104) for detecting a predetermined command and data output from said CPU to the I/O port assigned to said keyboard controller;
means (106, 107, 108, 110, 111, 112, 114) for generating a specific control signal for disabling a memory access of a certain specific range by said CPU in response to the detection of said command and data; and
means (116, 117) for transmitting said generated specific control signal to said memory and said keyboard controller.

2. A memory access control system according to claim 1, characterized in that said command output from said CPU is a data write request to said keyboard controller, the data output from said CPU is a request data to disable a memory access of a predetermined memory address or more, and said CPU transmits request data for disabling the memory access, to the keyboard controller without waiting for the response for the data write request from said keyboard controller.

3. A memory access control system according to claim 1, characterized in that said keyboard controller includes a function of outputting to said memory a signal for disabling the memory access of the certain specific range in response to the data write request and the request for disabling the memory access, and further comprises means for selecting the transmission of the memory access disabling signal from said keyboard controller to said memory or the transmission of the memory disabling signal from said disabling signal generating means to said memory.

4. A memory access control system according to claim 3, characterized in that said selection means selects the memory access disabling signal from said keyboard controller or the memory access disabling signal from said keyboard controller, in accordance with selection data set in a setup processing of the computer system.

5. A method for controlling a memory access in a computer system having a memory, a central processing unit (CPU), a keyboard controller to which an input and output (I/O) port is assigned, characterized by comprising the steps of:

a) transmitting data write request to said keyboard controller;

b) transmitting to said keyboard controller request for disabling a memory access of a certain specific range without waiting for the response for the request from said keyboard controller;

c) monitoring each request transmitted in steps a) and b) and generating a specific control signal for disabling a memory access of a certain specific range; and

d) transmitting the specific control signal to said memory and said keyboard controller.

F I G. 1

F I G. 2

F I G. 3

EP 0 419 797 A2